Europäisches Patentamt

European Patent Office

Office européen des brevets

(19)

(11) Publication number: **0 099 435**
**B1**

(12) **EUROPEAN PATENT SPECIFICATION**

(45) Date of publication of patent specification: **07.01.87**

(21) Application number: **82305849.0**

(22) Date of filing: **03.11.82**

(51) Int. Cl.⁴: **F 27 D 23/04,** C 22 B 9/05,
C 21 C 7/10, B 01 F 5/12

(54) Method of stirring molten metal and refractory cylinder for the purpose.

(30) Priority: **20.07.82 JP 126284/82**
**20.07.82 JP 126285/82**
**20.07.82 JP 126286/82**
**20.07.82 JP 126287/82**

(43) Date of publication of application:
**01.02.84 Bulletin 84/05**

(45) Publication of the grant of the patent:
**07.01.87 Bulletin 87/02**

(84) Designated Contracting States:
**DE FR GB SE**

(56) References cited:
**EP-A-0 000 466**
**WO-A-82/02152**
**AT-A- 319 300**
**DE-B-1 240 104**
**DE-B-2 329 807**
**GB-A-2 039 761**
**US-A-3 606 293**
**US-A-3 664 652**

(73) Proprietor: **KAWASAKI STEEL CORPORATION**
**No. 1-28, 1-Chome Kitahonmachi-Dori**
**Chuo-Ku, Kobe-Shi Hyogo 651 (JP)**

(72) Inventor: **Oguchi, Yukio**
**7-1-1009 Saiwai-Cho**
**1-Chome Chiba City (JP)**
Inventor: **Emi, Toshihiko**
**4-1, Kotehashidai 1-Chome**
**Chiba City (JP)**
Inventor: **Sumida, Norio**
**824-40 Shinkogutsuwa Sunadai**
**Mohara City (JP)**
Inventor: **Fujimura, Toshio**
**Kawasaki Seitetsu-Wakagi-Ryo, 3-1**
**Tsurunoura 1-Chome Kurashiki City (JP)**
Inventor: **Fujii, Tetsuya**
**14-6, Masago 4-Chome**
**Chiba City (JP)**
Inventor: **Ueda, Arata**
**21-30, Tamashima 2-Chome**
**Kurashiki City (JP)**

(74) Representative: **Overbury, Richard Douglas et al**
**HASELTINE LAKE & CO Hazlitt House 28**
**Southampton Buildings Chancery Lane**
**London WC2A 1AT (GB)**

Courier Press, Leamington Spa, England.

## Description

This invention relates to a method of stirring molten metal by repeatedly sucking and discharging part of the molten metal into and out of a refractory cylinder having an upper closed end and a lower open end immersed in the molten metal.

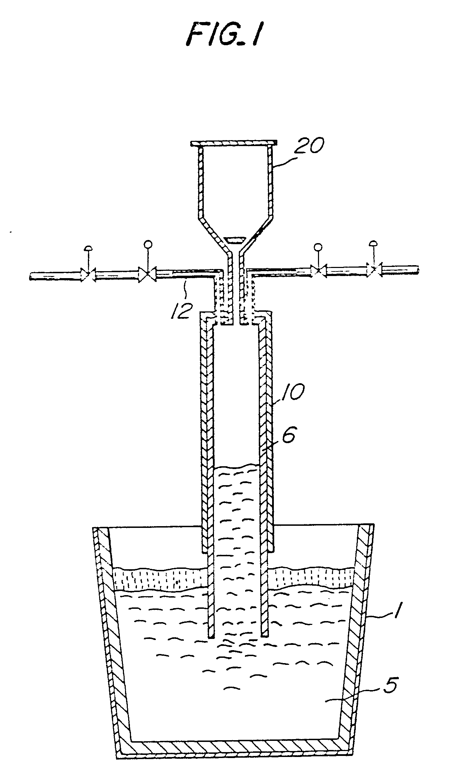

The inventors of the present application have previously proposed a superior secondary refining method for molten steel. This uses an assembly as shown in Fig. 1 of the accompanying drawings wherein the lower end of a cylinder 6 made of a refractory material is immersed in molten steel 5 in a ladle 1. The method comprises the steps of evacuating the cylinder 6 to suck up an amount of the molten steel into the cylinder and pressurizing the cylinder to rapidly discharge the sucked molten steel back into the ladle and periodically repeating the above operation to violently stir the molten metal in the ladle 1 with the aid of the kinetic energy transferred by the discharged molten steel. In this case, a deoxidizer or elements to be alloyed may be introduced into the cylinder. The added elements or the like melt into the molten steel in an inert atmosphere without any adverse effect from the slag and this ensures a high yield from the addition.

In order to obtain the necessary kinetic energy for effective stirring, the space above the meniscus of the melt in the cylinder is evacuated to raise the melt into the cylinder and then pressurized to rapidly discharge it into the ladle from the immersed end of the cylinder. This is repeated at a high number of cycles per unit time.

In actual operations on a scale of the order of 30 tons, the refractory cylinder has usually an inner diameter of from 600 to 1000 mm and a length as much as 3,500 mm and is provided at its upper end with a conduit 12 for pressurizing and evacuating and chutes 20 for adding refining agents and/or elements to be alloyed.

Usually, cylindrical metal cores are embedded in the immersed lower end of the cylinder for the purpose of shutting off air which may otherwise pass therethrough and reinforcing the lower end. The upper areas are surrounded by protecting steel plates 10.

The larger the refractory cylinder, the greater is usually the stirring force, but the shorter is its service life. From results of experiments by the inventors, it has been found that the life of the refractory cylinder depends not only upon its size but also upon the amount of molten steel to be stirred.

In raising and lowering the molten steel in the above manner, the inner surfaces of the refractory cylinder are necessarily damaged by the violent friction force between the moving molten metal column and the inner surfaces of the refractory cylinder at high temperatures. Also solidified steel deposited on the upper part of the inner surfaces due to splashing of the molten steel, caused by the variation in pressure, unavoidably lowers the performance of the apparatus.

The gas inlet for the pressurizing gas usually opens in an axial direction of the refractory cylinder through the ceiling thereof. In this case, the gas impinges directly against the uppermost surface of the raised molten metal column in the refractory cylinder so as to cause surges of the molten metal which in turn cause splashing. Moreover, there is a tendency for the pressurized gas to be partially absorbed in the molten metal. In order to avoid the adverse effect of the absorbed gas in the refining operation, a rare gas such as high purity argon is needed, which necessarily increases the refining cost because the inexpensive nitrogen gas cannot be used.

As mentioned above, splashing is caused by the surges of the molten metal and this limits the suction speed of the molten metal. On the other hand, high pressure is needed for rapid discharge. However, if the pressure is too high, there is a risk of the molten metal being violently blown away by the pressurized gas jetted from the immersed end into the molten metal. If the pressure is maintained at a low value to avoid this, the required stirring cannot be obtained.

By reducing the pressure to a value lower than the static pressure of the molten metal at the lower end of the refractory cylinder immediately before the surface of the pressurized molten metal in the refractory cylinder reaches the lower end thereof, the above blowing away of the molten metal may be avoided even when effecting rapid discharge using high pressure. However, the pressurizing period is in fact very short, within at the most 0.4—0.5 sec, and during this period the surface of the molten metal would reach the lower end of the cylinder. Thus the operation of measuring the pressure at that moment and stopping the pressurization or exhausting the pressure cannot be effected before the surface of the molten metal has become too low because the operation of a valve takes about 0.2 sec. Up to the present, accordingly, it has been necessary to use conditions which result in insufficient stirring, such as the lowest possible pressurizing speed or stable pressure ranges for avoiding the above problem.

However, it is of course essential to discharge the raised molten metal in the refractory cylinder at the highest speed in order to obtain sufficient stirring energy. In this case, if the pressurizing stroke or period is delayed, the pressurizing effect will be preceded by the fall of the molten metal column due to its weight and this will decrease the accelerating effect of the pressurizing operation acting upon the molten metal column. In the case where acceleration is caused by gas pressure, the work done by the gas in expanding becomes inherently the accelerating energy, so that it is desirable for the gas pressure for pressurizing the molten metal to be as high as possible.

GB—A—2 039 761 discloses a technique of stirring a metal melt in a furnace where a portion of the metal is withdrawn upwardly into a pipe by vacuum and then rapidly expelled by gas pressure back into the melt. This technique involves similar problems to those encountered in the aforementioned proposal by the inventors.

It is an object of the present invention to provide a method of stirring molten metal to improve the refining effect to the maximum with the minimum use of refractory material.

It is another object of the present invention to provide a method of stirring molten metal which eliminates the tendency for the pressurized gas to be absorbed into the molten metal which adversely affects the refining operation, and which further eliminates the surges and splashes of molten metal caused by the pressurized gas impinging directly against the uppermost surface of the raised molten metal column in the refractory cylinder.

According to the present invention there is provided a method of stirring molten metal by repeated sucking and rapidly discharging part of said molten metal into and out of a refractory cylinder having a lower open end immersed in said molten metal characterised in that (i) the inner diameter (d) of said refractory cylinder is less than 1,000 mm (ii) the relationship between the inner diameter (d) in mm of said refractory cylinder and the weight (W) in tons of said molten metal in said vessel is $d/W^{0.5}>30$, and (iii) the immersed depth of said refractory cylinder is from 200 to 700 mm.

In accordance with a preferred embodiment of the present invention, the molten metal is rapidly discharged from the cylinder by means of a pressurized gas introduced into the cylinder in an inclined direction relative to the vertical axis of the cylinder against a point on an opposite inner wall of the cylinder at least 500 mm above the maximum level to which molten metal is sucked into the cylinder. In this manner, the violent surges on the surface of the molten metal are suppressed to considerably decrease the amount of gas absorbed in the metal. Thus a sufficient refining effect can be obtained even if nitrogen or argon mixed with about 10% oxygen as an impurity is used.

In accordance with a further embodiment of the invention the refractory cylinder is such as to facilitate removing the solidified metal deposited on the inside of the cylinder as a result of splashing and to enable cylinder parts to be exchanged during the service life of the refractory cylinder.

For this purpose, the refractory cylinder comprises a flange connection at a location, preferably 100—1,000 mm higher than the maximum level to which the molten metal is sucked up the cylinder.

In accordance with another embodiment of the invention the refractory cylinder is capable of maintaining its initial performance even if the lower parts thereof are exchanged many times. This is achieved by providing at the upper part of the cylinder a connecting port, opening into the inside of the cylinder, for a gas conduit for evacuating and pressurizing means and connecting ports for chutes for adding refining agents and/or elements to be alloyed.

In accordance with yet another embodiment of the invention, the lower part of the refractory cylinder, which is likely to be damaged due to thermal attack on its inner and outer sides, is capable of being easily removed.

In accordance with a still further embodiment of the invention the refractory cylinder is provided with a flow restricting opening having an inner diameter narrower than the inner diameter of the cylinder to increase the speed of discharge of the molten metal column and thereby improve the efficiency of the stirring.

For a better understanding of the invention and to show how the same may be carried into effect, reference will now be made, by way of example, to the accompanying drawings, in which

Fig. 1 is a sectional view of a refractory cylinder used in accordance with the inventors' previous proposals:

Fig. 2 is a schematic sectional view of a refractory cylinder used in accordance with the present invention;

Fig. 3 is a graph illustrating the relationship between the inner diameters of refractory cylinders and their useful lives when used for stirring molten metal.

Fig. 4 is a graph illustrating the effect of the inner diameters of refractory cylinders on the time required for uniformly stirring molten metal;

Fig. 5 is a graph showing the relationship between the inner diameters of the refractory cylinders and the weight of molten metal which can be uniformly stirred;

Fig. 6 is a graph illustrating the relationship between the immersed depth of the refractory cylinder and the occurrence of cracks therein;

Fig. 7 is a graph showing the relationship between the immersed depth of the refractory cylinder and inclusions in the metal;

Fig. 8 is a schematic sectional view illustrating a refractory cylinder used in accordance with an embodiment of the invention and showing the connecting flanges in phantom lines;

Fig. 9 is a partial sectional view of a principal part of the refractory cylinder of Figure 8;

Figure 10a is a front view of an actual refractory cylinder, partially in section, used in accordance with an embodiment of the invention;

Fig. 10b is a sectional view along the line 10a—10a in Fig. 10a;

Fig. 11 is a schematic sectional view of a refractory cylinder, used in accordance with another embodiment of the invention;

Fig. 12 is a graph showing the relationship between the oxygen content of the pressurized gas and the amount of oxygen picked up in the stirred steel;

Fig. 13 is a schematic sectional view of a refractory cylinder for explaining a further embodiment of the invention;

Fig. 14 is a schematic sectional view of a refractory cylinder in accordance with a further embodiment of the invention; and

Fig. 15 is a graph illustrating the effect of $(d_1/d)^2$ in Fig. 14 on the splashing of molten metal during stirring.

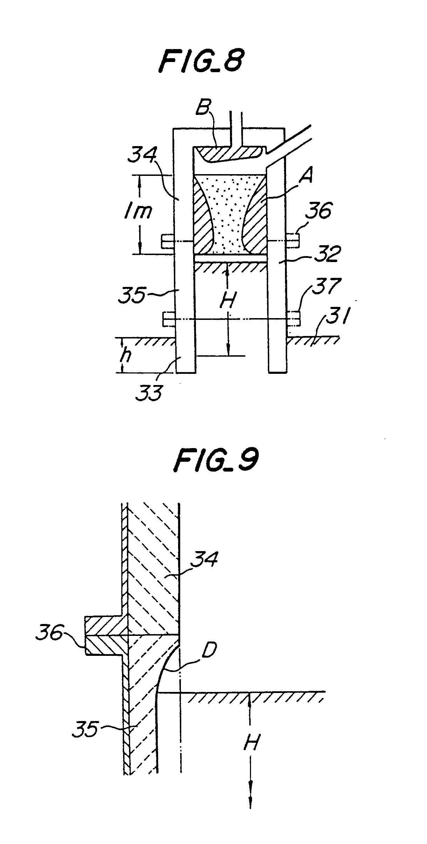

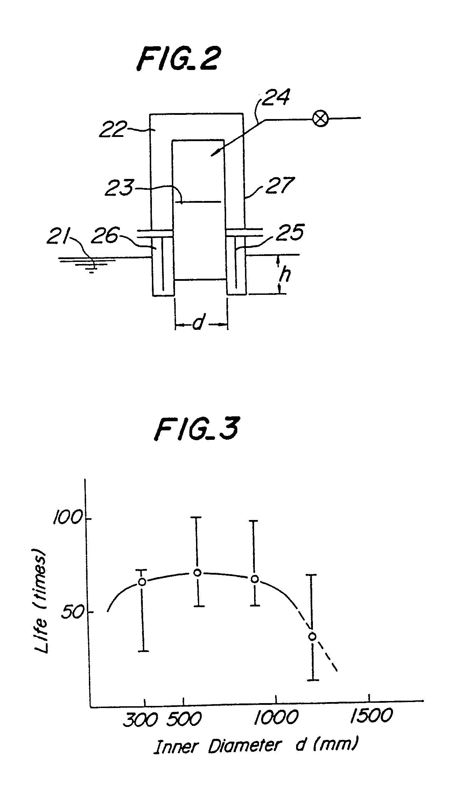

Fig. 2 illustrates a refractory cylinder 22 in section whose open lower end 26 is immersed in a molten metal 21 of which part 23 is sucked into the refractory cylinder 22 by means of an evacuating and pressurizing system 24. The refractory cylinder 22 includes a cylindrical metal core 25 embedded in the lower end 26 thereof to provide reinforcement. The cylindrical metal core 25 is provided at its upper end with a flange to which is connected a flange of an outer surrounding steel cylinder 27 forming the upper part of the refractory cylinder 22 to facilitate removing the immersed lower end 26 when it has been considerably consumed so that it can be replaced or repaired. The inner diameter of the refractory cylinder 22 is denoted by d and the depth of the immersed portion of the cylinder is denoted by h.

The lower end 26 of the refractory cylinder 22 is reinforced by the cylindrical metal core 25 in the above manner. In this case, due to the difference in thermal expansion between the refractory material and the metal core, cracks will occur in the refractory and these will shorten the life of the cylinder.

When the refractory cylinder 22 has too large a diameter, the distance over which the slag layer moves along the outer surface of the refractory cylinder is unduly long because of the great amount of molten metal which is sucked. Thus erosion of the outer surface increases and this shortens the life of the cylinder. Accordingly, it is preferred to make the refractory cylinder as small as possible and to space the outer surface of the refractory cylinder at least 1 m from the inner surface of the ladle whose capacity is normally from 25—200 t on an industrial scale.

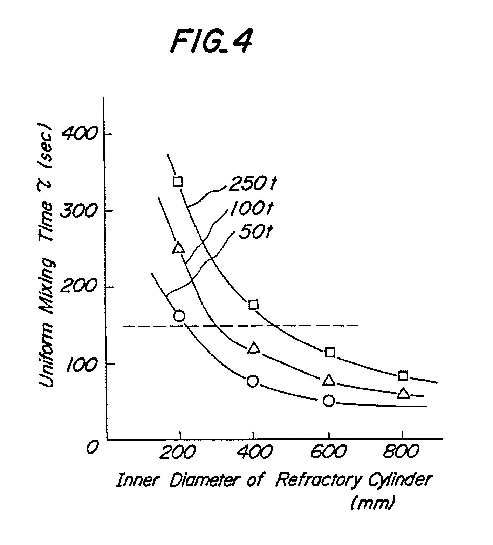

Fig. 3 illustrates the results of tests on the lives of refractory cylinders having various inner diameters when used with conventionally sized ladles. It is evident that the refractory cylinders having inner diameters of less than 1,000 mm have superior lives to those having larger inner diameters.

As above described, it is preferable to use a refractory cylinder having a smaller inner diameter in view of the life of the refractory material. On the other hand, however, it is desired to treat the molten metal as much as possible in order to obtain a high stirring efficiency. Accordingly, the inventors of the application have further investigated the relationship between the stirring effect and the inner diameter of the refractory cylinder.

Using ladles of three sizes for molten steel viz. 50, 100 and 250 t, the stirring effect was studied for refractory cylinders having various inner diameters. The stirring effect was indicated by the time (referred to as "uniform mixing time t") required for uniformly melting and distributing aluminium added to the molten steel during treating. The uniform mixing time was measured by adding 50 to 100 Kg of aluminium to the molten metal to be treated by stirring. The molten steel in the ladle was alternately sucked into and discharged out of the cylinder at a gauge pressure of −600 mmHg to +200 mmHg in the cylinder using a 5 sec period of pressure variation consisting of a pressurizing period of 0.5 sec and an evacuating period of 4.5 sec. The immersed depth h of the cylinders 22 (Fig. 2) was substantially constant at 300—400 mm. The relation between the uniform mixing time and the inner diameters of the cylinders is shown in Fig. 4.

A uniform mixing time of less than 150 sec is preferable having regard to the floating and separation of inclusions and the uniform distribution of elements to be alloyed with the molten metal for experimental refining. The following relationships between the inner diameters d (mm) and the weights W (t) of molten metal to be treated are obtained from Fig. 4.

With W= 50 t, d>215 mm

With W=100 t, d>300 mm

With W=250 t, d>470 mm

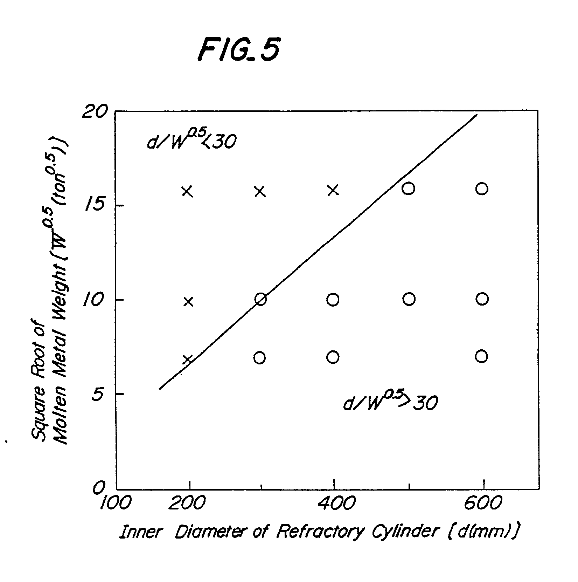

The square roots of the weights of the molten metal are plotted in relation to the inner diameters of the cylinders in Fig. 5, wherein open marks illustrate cases fulfilling the condition of a uniform mixing time of less than 150 sec and cross marks shown cases not fulfilling that condition. From Fig. 5, it is clear that if the relationship between the inner diameter d of the cylinder and the weight W of molten metal is selected so as to fulfil the relation $d/W^{0.5}>30$, the required stirring effect can easily be obtained.

If the immersed depth h of the cylinder 22 (Fig. 2) is too deep, the refractory material is likely to be damaged because the cylinder is subjected on its inner and outer sides to more extensive heating and this causes a larger deformation of the cylinder. The inventors visibly inspected the outer and inner surfaces of the cylinders after the treatment with the molten metal at 1,600—1,610°C for ten minutes. One result of this investigation is shown in Fig. 6, from which it is clear than with an immersed depth of more than 700 mm, cracks are formed in the refractory walls to a particularly large extent but with an immersed depth of less than 700 mm, substantially no cracks occurred.

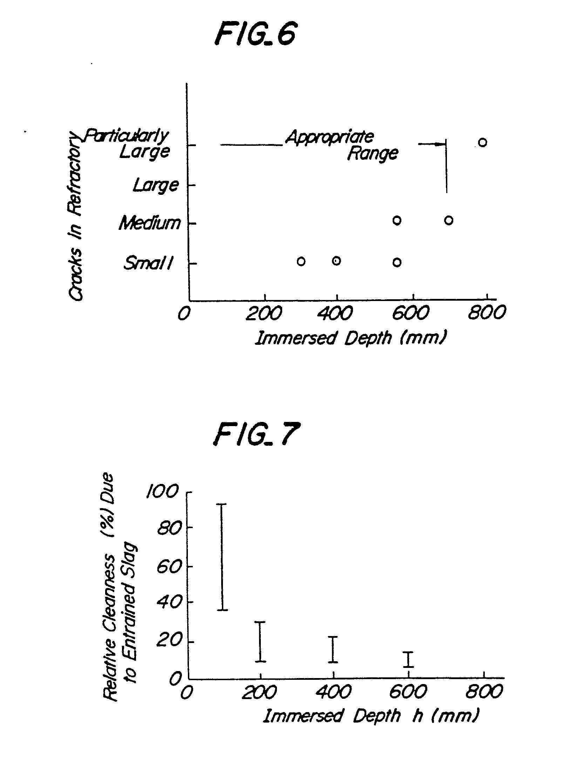

If the immersed depth of the cylinder is too small, there is a tendency for slag to be entrained into the molten metal. This is apparent from Fig. 7. When the immersed depth of the cylinder is less than 200 mm, the violent discharge of the molten metal into the ladle tends to entrain the slag (particularly iron oxide containing slag) thereby increasing the oxygen content of the molten metal.

As mentioned above, the arrangement should be such that cracks in the refractory material are suppressed to prevent the cylinder breaking due to the severe conditions caused by the repeated high speed flow of the high temperature molten metal. By means of the present invention, the stirring refining of metals can be effectively carried out in a systematic manner for production purposes.

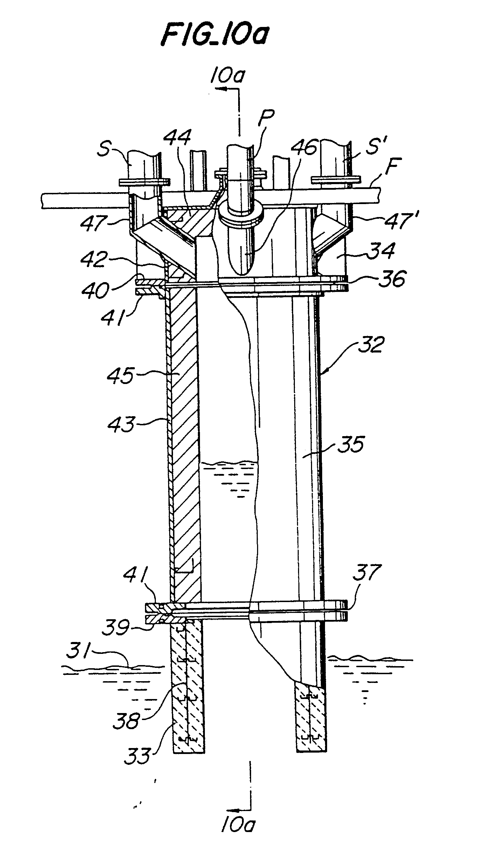

Fig. 8 illustrates a preferred embodiment of a cylinder for use in the present invention. The cylinder 32 is conventional in that it has an open lower end 33 immersed in molten metal 31 in a refining vessel, for example, a ladle, but its upper cylinder part 34 and an intermediate cylinder part 35 of the cylinder 32 are provided with a flange connection 36 (shown by phantom lines) and its intermediate cylinder part 35 and the lower open end 33 are provided with a flange connection 37 (shown by phantom lines).

An immersed depth h of about 0.5 m and a sucked height H of molten metal in the cylinder of approximately 1.2 m are needed for effectively stirring and refining the molten metal according to an experiment carried out by the inventors. Under such operating conditions, they found that the deposits of molten metal due to splashing extend over a zone "A", 100—1,000 mm above the maximum suction height H and a zone "B" on the underside of the ceiling of the cylinder, which are shaded in Fig. 8. On the other hand, the damage "D" to the inner surface of the refractory cylinder due to melting extends to a level 100 mm above the maximum suction height H as shown in Fig. 9.

In order to facilitate the removal of these deposits on the inside of the refractory cylinder, according to a preferred embodiment of the invention the flange connection 36 is provided at a location 100—1,000 mm above the maximum suction height H, thereby facilitating cleaning or clearing the inside of the upper cylinder part 34 of the cylinder after removal thereof. As the upper cylinder part 34 is not subjected to attack by melting as shown in Fig. 9, it is sufficient to exchange only the intermediate and lower cylinder parts 35 and 33 to be able to make further use of the cylinder. Moreover, the second flange connection 37 is effective for exchanging the lower open end 33 which is always immersed in the molten melt and subject to erosion.

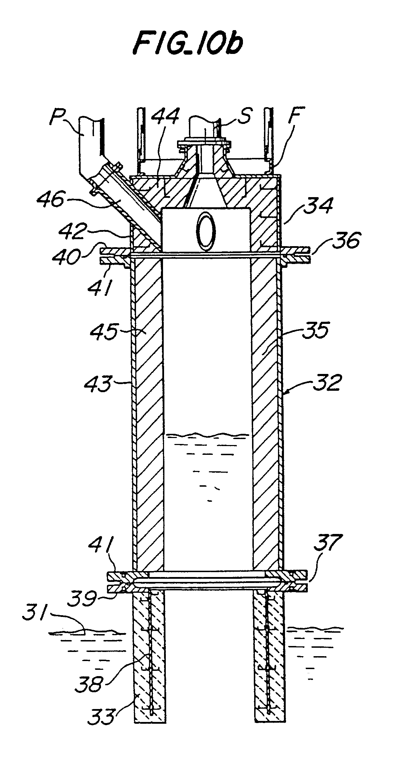

Figs. 10a and 10b illustrate a concrete example of a refractory cylinder 32 for use according to the invention. In this embodiment, a lower open end 33 of the cylinder is made of a castable refractory material in the form of a cylinder which includes a reinforcement 38 embedded therein and, at its upper end, an annular flange 39 integrally fixed thereto. The cylinder 32 also includes upper and intermediate steel cylinders 42 and 43. The lower end of upper cylinder 42 is provided with an annular flange 40 and the upper and lower ends of intermediate cylinder 43 are provided with annular flanges 41. Cylinders 42 and 43 are lined with refractory bricks 44 and 45 to form upper and intermediate cylinder parts 34 and 35, respectively.

It is preferable to provide baffles (not shown) below the openings of the inside of the upper cylinder part 34 to prevent depositing of metal as a result of splashing.

The flange connection 36 consisting of the annular flanges 40 and 41 is at a location 900 mm above the predetermined maximum suction height of molten metal in the refractory cylinder 32 and the second flange connection 37 consisting of the annular flanges 39 and 41 is at a location 900 mm from the lower open end 33.

The upper cylinder part 34 is closed at its upper end by an upper refractory wall and is provided with a connecting port 46 opening into the upper cylinder part for a gas conduit P for evacuating and pressurizing and connecting ports 47 and 47' for chutes S and S' for adding refining agents and/or elements to be alloyed. The upper cylinder part 34 is further provided with a support plate F fixed thereto for the gas conduit P and for operating equipment for the chutes S and S'.

In practical operation using refractory cylinders, in the event that only the lower cylinder parts were detachable, they had to be exchanged after being used about forty times and the whole refractory cylinder could be used about ninety times. When using a refractory cylinder in accordance with a preferred embodiment of the invention, the intermediate cylinder parts were exchanged after being used ninety-three times and the whole refractory cylinder could be used more than two hundred times. Thus as much as 30% of the refractory material could be saved.

In accordance with an embodiment of the present invention, as above mentioned, the part of the refractory cylinder likely to be damaged due to the violent lifting movement of the molten metal can be easily exchanged or repaired to improve the life of the whole refractory cylinder resulting in a saving of the refractory material used. Moreover, the refractory cylinder can be easily recovered in the event of functional disorder due to the deposition of molten metal as a result of splashing.

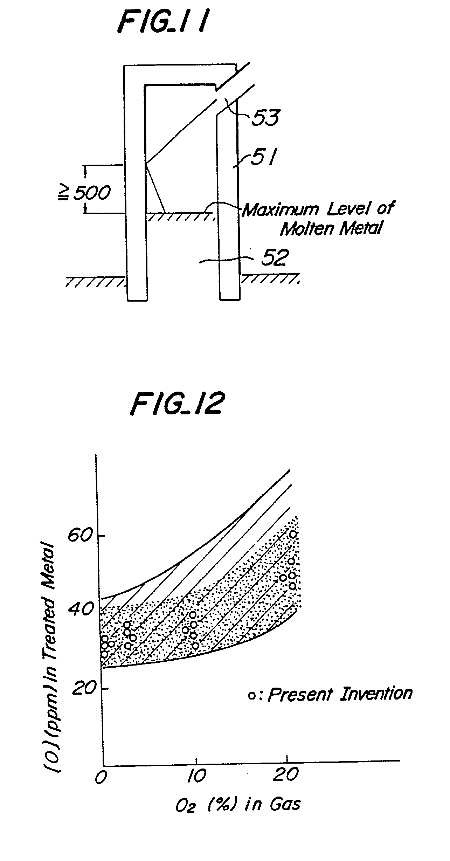

Referring to Fig. 11 there is shown a refractory cylinder 51 including molten metal 52 sucked to the maximum level. The refractory cylinder is provided with an inlet 53 for expelling or discharging the molten metal out of the cylinder. The inlet 53 is inclined at 45° to the vertical axis of the cylinder. The inventors carried out the stirring refining of steel with nitrogen gas using the refractory cylinder shown in Fig. 11, observing through a sight glass the action of the introduced pressurized gas. It was found in the observation that the surges on the surface of the molten metal were effectively suppressed and the value [N] in the metal (which increased to the order of 5 ppm in the prior art) did not substantially increase and even decreased in some cases.

With this refractory cylinder, an extension of the central axis of the inlet 53 intersects the opposite inner wall of the cylinder at a point 700 mm above the maximum molten metal level and the increase in the value [N] is between −5 ppm and −2 ppm. The same effect is obtained even if the above intersecting point is lowered to 500 mm above the maximum molten metal level.

The inventors further carried out the operation with pressurized nitrogen gases ($N_2$) containing various amounts of oxygen gas ($O_2$), the results being shown in Fig. 12 whose hatched area shows the range of [O] in the prior art. Open marks illustrate the results obtained according to the invention, which are within the finely shaded range. From Fig. 12, it is clear that extremely high values of [O] can be avoided and that even a pressurized gas including up to 10% oxygen can be used in practice without trouble. In this manner, the pressurized gas including impurities can be effectively used for stirring refining according to the invention, so long as the oxygen gas ($O_2$) included in the pressurized gas is less than 10%.

The use of a refractory cylinder in accordance with the above embodiment of the invention solves the problem of gas absorption in the metal and remarkably reduces the cost of the pressurized gas, so that an effective stirring refining operation can be performed without risk of excess gas absorption.

The inventors further carried out experiments with respect to the pressurizing and evacuating condition and developed a further preferred embodiment of the invention. This lies in the following discovery:—

1. When the lower opening of the refractory cylinder is narrowed, the amount of molten metal passing therethrough per unit time is reduced to increase the time required to discharge the molten metal out of the cylinder.
2. Even if the pressure for discharging the molten metal out of the cylinder is higher, the time required to discharge the molten metal cannot be considerably shortened.
3. Increased pressure for discharging the molten metal can result in the production of a high speed jet of molten metal and increases the stirring energy.
4. If the stirring energy is sufficient, it is not necessarily required to discharge all the sucked molten metal. Accordingly, part of the molten metal can remain in the lower end of the cylinder.
5. In this manner, the speed of descent of the molten metal towards the lower end of the cylinder is less, so that the surges and hence splashes of molten metal (which would ordinarily occur if the descent of molten metal in the refractory cylinder were more rapid) can be prevented.
6. Moreover, the low descent speed of the molten metal can prevent the gas blowing away at the lower end of the cylinder due to delay in changing over the pressurizing period to the evacuating period.

Based on their discoveries, the inventors have found that when the refractory cylinder is provided at its lower end with a flow restricting opening having a diameter $d_1$ and a length $l_1$, if $l_1/l_2 > 0.2$ and $d_1/d = 0.5$—$0.96$ are fulfilled with regard to the maximum sucked height $l_2$ of the molten metal above the flow restricting opening and the inner diameter d of the refractory cylinder, the aimed object of the invention can be appropriately realized.

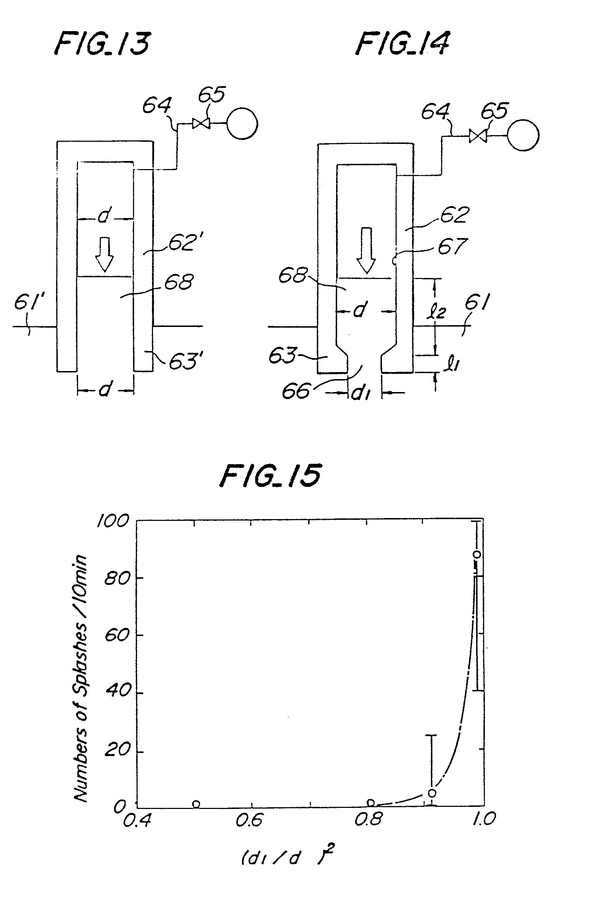

Fig. 13 schematically illustrates a refractory cylinder for comparative purposes to assist understanding a further embodiment of the invention shown in Fig. 14. In these drawings, the refractory cylinder 62, 62' has a submerged or immersed open end 63, 63' in molten metal 61, 61' in a ladle (not shown) and is provided with a conduit 64 for evacuating and pressurizing the cylinder including a regulating valve 65.

As shown in Fig. 14, according to the invention the refractory cylinder 62 is provided at its immersed end 63 over a distance $l_1$ with a flow restricting opening 66 having an inner diameter $d_1$ narrower than the inner diameter d of the cylinder 62' in Fig. 13. The main cylinder part 67 of the refractory cylinder 62, adjacent to the flow restricting opening 66, has over a distance $l_2$ of the maximum molten metal suction height an inner diameter d i.e. an inner diameter substantially equal to the inner diameter of the cylinder 62' in Fig. 13.

Fig. 15 illustrates the results of investigations for studying the effect of the area ratio $(d_1/d)^2$ on the splashing of molten metal. The experiment was effected with aluminium killed steel for 10—12 minutes of treating time using a maximum pressure of 250 mmHg, a minimum pressure of −600 mmHg and a 6 second period for evacuating and pressurizing. The number of splashes which reached an inspection window secured in an air-tight manner to the ceiling of the refractory cylinder were counted during ten minutes of the operation and are plotted as ordinates in Fig. 15.

As can be seen from Fig. 15, the splashes are suppressed by maintaining

$$d_1/d \leq 0.92^{0.5} \cong 0.96$$

and this suppression is to an extent more than that obtained by limiting the ascending speed of the molten metal in the refractory cylinder. A diameter $d_1$ which is only slightly smaller than d can bring about this significant effect for the reason which will be explained hereinafter.

The smaller the inner diameter $d_1$ of the flow restricting opening 66, the less is the descent speed $U_L$ of the molten metal in the cylinder. If the discharging speed of the molten metal through the flow restricting opening 66, which is indicated by

$$U_N = U_L \times (d/d_1)^2,$$

is kept substantially the same as in the case of the cylinder 62' in Fig. 13, the descent speed $U_L$ of the molten metal surface can be maintained at a lower value, which is $U_N \times (d_1/d)^2$, and within a range preventing the splashes. If the inner diameter $d_1$ of the flow restricting opening 66 is too small, the ascent speed of the molten metal in the suction stroke becomes too high at the flow restricting opening, so that gaseous elements contained in the molten metal form bubbles, depending upon the existing degree of vacuum, to cause splashing of molten metal and the rising of the molten metal is delayed thus increasing the time required for the suction stroke. This reduces the number of operations which can be carried out in the limited period of time available for treating the metal.

According to the results of the inventor's experiments in connection therewith, when the refractory cylinder shown in Fig. 13 is used, the splashes could be almost prevented by allowing more than 2.5 sec for the evacuating or suction stroke or using an evacuating speed of less than 500 mmHg/sec. When such an evacuating speed is selected for the refractory cylinder shown in Fig. 14, the molten metal column 68 reaches the predetermined level in a period of time which is $(d/d_1)^2$ times larger than the time for the cylinder shown in Fig. 13.

In general, the time for treating the molten metal should be within 15 minutes bearing in mind the refining capacity, for example, productivity and the temperature drop of the molten metal. During such a short time, a sufficient deoxidation refining should be carried out, so that the time for the evacuating or suction strokes must be shorter than 10 sec. Accordingly, in order that the time $2.5 \times (d/d_1)^2$ for the vacuumizing stroke for preventing splashing of the molten metal in the cylinder in Fig. 14 is shorter than 10 sec, $(d/d_1)^2$ should be $<4$ or $d_1/d$ should be $>0.5$. It has been found that the use of cylinders having inner diameters $d_1$ which are too small causes considerable damage to the refractory of the cylinder.

Then, if the length $l_1$ of the flow restricting opening 66 is too short, violent turbulences are caused in the flow of the molten metal as it is sucked and discharged through the opening and this damages the refractory considerably. According to the results of experiments carried out with models, it has been found that violent turbulences can be eliminated when $l_1/l_2 > 0.2$, or more preferably when $l_1/l_2 > 0.3$, where $l_1$ is the length of the flow restricting opening and $l_2$ is the height of the molten metal adjacent to and above the opening. The opening 66 is preferably tapered downwards and it is preferable to avoid a sharp edge or shoulder.

As is clear from the above description, the term "flow restricting opening" used herein is intended to mean an opening at the immersed lower end of the refractory cylinder which is narrowed so as to have a diameter less than that of the cylinder.

Example

Using a refractory cylinder having an inner diameter of 600 mm and a flow restricting opening having a length of 300 mm and an inner diameter of 360 mm, the stirring of molten metal by suction and discharge was carried out by repeatedly pressurizing and evacuating using a cycle of 8 sec at pressures between a maximum pressurizing pressure of 400 mmHg and a minimum evacuating pressure of −550 mmHg (gauge pressure).

The molten metal was sufficiently strongly stirred without any risk of jetting gases from the lower end of the cylinder. According to observation after the treatment, the deposit of metal on the inside of the cylinder due to splashing was negligible.

Comparative Test 1

With a refractory cylinder having an inner diameter of 600 mm without any flow restricting opening, the stirring was carried out under the same conditions as above. Although the maximum gauge pressure in the pressurizing stroke was limited to 330 mmHg, gases jetted from the lower end of the cylinder at this limited pressure to blow away the molten metal.

Comparative Test 2

The stirring was carried out under conditions similar to those of comparative test 1 with the exception that the maximum gauge pressure was 100 mmHg in the pressurizing strokes. In order to obtain a sufficient stirring effect using this condition, the time for pressurizing had to be 0.28 sec. After the treatment, the inside of the refractory cylinder was covered with a deposit of metal of about 20 mm thickness.

As can be seen from the above, the stirring refining of metals can be effectively carried out in production in a systematic manner according to the invention. Moreover, the part of the refractory cylinder likely to be damaged due to the violent lifting movement of the molten metal can be easily exchanged or repaired so as to improve the life of the whole refractory cylinder and result in a saving of the amount of refractory material used. Furthermore, the refractory cylinder can be easily cured of functional disorders caused by deposition of molten metal due to splashing.

According to the invention, moreover, the problem of gas absorption in the metal can be solved and the cost of the pressurized gas can be remarkably reduced so that effective stirring refining can be performed without practical risk of excess gas absorption. In accordance with the invention the molten metal in the refractory cylinder can be sufficiently strongly stirred without any risk of jetting gases from the lower end of the cylinder and without deposition of metal on the inside of the cylinder due to splashing.

**Claims**

1. A method of stirring molten metal by repeated sucking and rapidly discharging part of said molten metal into and out of a refractory cylinder (22) (32) (51) (62) having a lower open end (26) (33) (63) immersed in said molten metal (21) (31) (52) (61) in a vessel characterised in that (i) the inner diameter (d) of said refractory cylinder is less than 1,000 mm, (ii) the relationship between the inner diameter (d) in mm of said refractory cylinder and the weight (W) in tons of said molten metal in said vessel is $d/W^{0,5}>30$, and (iii) the immersed depth of said refractory cylinder is from 200 to 700 mm.

2. A method according to claim 1, wherein the molten metal is rapidly discharged from the refractory cylinder by introducing a pressurized gas into said refractory cylinder in an inclined direction relative to a vertical axis of the refractory cylinder and towards a point on the opposite inner wall of the cylinder which is at least 500 mm above the maximum level to which the molten metal is sucked into the cylinder.

3. A method according to claim 2, wherein said pressurized gas is at least one inert gas, such as argon or nitrogen, optionally including up to 10% oxygen.

4. A method according to any one of claims 1 to 3 wherein the cylinder has a flange connection (36) at a location higher than the maximum level to which the molten metal is sucked into the cylinder.

5. A method according to claim 4, wherein said location of the flange connection is from 100 to 1,000 mm above said maximum level.

6. A method according to claim 4 or 5, wherein the cylinder comprises, above said flange connection, a connecting port (46) (53) opening into the inside of the cylinder for a gas conduit (P) whereby the cylinder may be evacuated and pressurised to effect said sucking and discharging.

7. A method according to any one of claims 4 to 7 wherein said cylinder further comprises, above said flange connection, connecting ports (47, 47') for chutes (S) (S') for adding refining agents and/or elements to be alloyed.

8. A method according to any one of claims 4 to 7 wherein said cylinder further comprises a second flange connection (37) between the aforementioned flange connection and its lower open end whereby the immersed end may be detached from the remainder of the cylinder.

9. A method according to any one of the preceding claims wherein the open end of the cylinder has a flow restricting opening (66) having a diameter $d_1$ and a length $l_1$ along the axis of the cylinder such that $l_1/l_2>0.2$ and $d_1/d=0.5—0.96$ where $l_1+l_2$ is the height to which the molten metal is sucked into the cylinder.

**Patentansprüche**

1. Verfahren zum Rühren eines schmelzflüssigen Metalls durch wiederholtes Ansaugen in einen, und durch schnelles Ausstoßen eines Teils des schmelzflüssigen Metalls in und aus einem hitzebeständigen Zylinder (22, 32, 51, 62), dessen unterer Endteil (26, 33, 63) in das in einem Gefäß befindliche schmelzflüssige Metall (21, 31, 52, 61) eintaucht, dadurch gekennzeichnet, daß (i) der Durchmesser (d) des hitzebeständigen Zylinders weniger als 1.000 mm beträgt, (ii) das Verhältnis zwischen dem in mm gemessenen Innendurchmesser (d) des hitzebeständigen Zylinders und dem in t gemessenen Gewicht (W) des im Gefäß befindlichen, schmelzflüssigen Metalls $d/W^{0,5}>30$ ist und (iii) die Eintauchtiefe des hitzebeständigen Zylinders zwischen 200 und 700mm beträgt.

2. Verfahren nach Anspruch 1, worin das schmelzflüssige Metall durch Einführen von Druckgas unter einem Winkel zur senkrechten Achse des hitzebeständigen Zylinders und in Richtung auf eine an der gegenüberliegenden Wandung des Zylinders, mindestens 500mm oberhalb der maximalen Ansaughöhe des schmelzflüssigen Metalls in den Zylinder hinein gelegene Stelle schnell aus dem hitzebeständigen Zylinder ausgestoßen wird.

3. Verfahren nach Anspruch 2, worin das Druckgas mindestens ein inertes Gas wie z.B. Argon oder Stickstoff und ggf. bis zu 10% Sauerstoff umfaßt.

4. Verfahren nach einem der Ansprüche 1 bis 3, worin oberhalb der maximalen Ansaughöhe des schmelzflüssigen Metalls in den Zylinder dieser eine Flanschverbindung (36) besitzt.

5. Verfahren nach Anspruch 4, worin die Flanschverbindung zwischen 100 und 1000mm oberhalb der maximalen Ansaughöhe liegt.

6. Verfahren nach Anspruch 4 oder 5, worin der Zylinder oberhalb der Flanschverbindung eine Verbindungsöffnung (46, 53) für eine Gasleitung (P) besitzt, die in das Innere des Zylinders mündet, so daß der Zylinder sich entleeren und unter Druck setzen läßt, um das Ansaugen und das Ausstoßen zu bewerkstelligen.

7. Verfahren nach einem der Ansprüche 4 bis 7, worin der Zylinder weiterhin oberhalb der Flanschverbindung Verbindungsöffnungen (47, 47') für Rutschen (S) und (S') umfaßt, durch die Veredelungskomponenten und/oder -elemente hinzugefügt werden können, die mitlegiert werden.

8. Verfahren nach einem der Ansprüche 4 bis 7, worin der Zylinder weiterhin eine zweite, zwischen der genannten Flanschverbindung und seinem unteren offenen Ende gelegene Flanschverbindung (37) besitzt, so daß das eintauchende Ende sich vom übrigen Zylinder abmontieren läßt.

9. Verfahren nach einem der Ansprüche 1 bis 8, worin das offene Ende des Zylinders eine einen Durchmesser $d_1$ sowie eine in Richtung der Zylinderachse gemessene Länge $l_1$ aufweisende Drosselstelle (66) aufweist, wobei $l_1/l_2>0,2$ und $d_1/d=0,5—0,96$, wobei $l_1+l_2$ die Ansaughöhe des schmelflüssigen Metalls im Zylinder bezeichnet.

**Revendications**

1. Une méthode d'agitation de métal en fusion, par aspiration répétée et refoulement rapide d'une partie du dit métal en fusion à l'intérieur et hors d'un cylindre réfractaire (22) (32) (51) (62) ayant une extrémité ouverte inférieure (26) (33) (63) immergée dans le dit métal en fusion (21) (31) (52) (61) dans une cuve, la dite méthode étant caractérisée par le fait: (i) que le diamètre intérieur (d) du dit cylindre réfractaire est inférieur à 1.000 mm; (ii) que le rapport entre le diamètre intérieur (d) en mm du dit cylindre réfractaire et le poids (W) en tonnes du dit métal en fusion dans la dite cuve est $d/W^{0.5}>30$; et (iii) que la profondeur d'immersion du dit cylindre réfractaire est de 200 à 700 mm.

2. Une méthode selon la revendication 1, dans laquelle le métal en fusion est rapidement refoulé hors du cylindre réfractaire par l'introduction d'un gaz sous pression dans le dit cylindre réfractaire, dans une direction inclinée par rapport à un axe vertical du cylindre réfractaire et vers un point sur la paroi intérieure opposée du cylindre qui se situe à au moins 500 mm au dessus du niveau maximum à la hauteur duquel le métal en fusion est aspiré dans le cylindre.

3. Une méthode selon la revendication 2, dans laquelle le dit gaz sous pression est au minimum un gaz inerte, tel que de l'argon ou de l'azote, incluant facultativement jusqu'à 10% d'oxygène.

4. Une méthode selon une quelconque des revendications 1 à 3, dans laquelle le cylindre comporte un raccord à bride (36) en un point plus élevé que le niveau maximum auquel le métal un fusion est aspiré dans le cylindre.

5. Une méthode selon la revendication 4, dans laquelle le dit point où est situé le raccord à bride se trouve de 100 à 1.000 mm plus haut que le dit niveau maximum.

6. Une méthode selon la revendication 4 ou 5, dans laquelle le cylindre comprend, au dessus du dit raccord à bride, un orifice de raccordement (46) (53) s'ouvrant dans l'intérieure du cylindre pour le passage d'une conduite de gaz (P) permettant d'évacuer le cylindre et de le mettre sous pression de manière à assurer la dite aspiration et le dit refoulement.

7. Une méthode selon une quelconque des revendications 4 à 7, dans laquelle ledit cylindre comprend en outre, au dessus du dit raccord à bride, des orifices de raccordement (47, 47') pour des goulottes (S) (S') destinées à l'addition d'agents d'affinage et/ou d'éléments d'alliage.

8. Une méthode selon une quelconque des revendications 4 à 7, dans laquelle le dit cylindre comprend en outre un deuxième raccord à bride (37) entre le raccord à bride mentionné ci-avant et l'extrémité inférieure ouverte du cylindre, ce qui permet de détacher l'extrémité immergée par rapport au reste du cylindre.

9. Une méthode selon l'une quelconque des revendications précédentes, dans laquelle l'extrémité ouverte du cylindre comporte une ouverture de restriction de débit (66) ayant un diamètre $d_1$ et une longeur $l_1$ le long de l'axe du cylindre prévus de manière que $l_1/l_2$ soit plus grand que 0,2 et que $d_1/d$ soit égal à 0,5—0,96, $l_1+l_2$ étant la hauteur à laquelle le métal en fusion est aspiré dans le cylindre.

## FIG.1

*FIG_8*

*FIG_9*

## FIG. 2

## FIG. 3

## FIG_4

Uniform Mixing Time $\tau$ (sec)

250 t
100 t
50 t

Inner Diameter of Refractory Cylinder
(mm)

4

# FIG. 5

Square Root of Molten Metal Weight $(W^{0.5}(ton^{0.5}))$

$d/W^{0.5}<30$

$d/W^{0.5}>30$

Inner Diameter of Refractory Cylinder $(d(mm))$

# FIG.6

# FIG.7

# FIG_10a

## FIG.10b

# FIG.11

≧ 500

53
51

Maximum Level of Molten Metal

52

# FIG.12

(O) (ppm) in Treated Metal

60

40

20

o: Present Invention

0          10          20

$O_2$ (%) in Gas

9

## FIG_13

## FIG_14

## FIG_15

$(d_1/d)^2$